# EUROPEAN PATENT SPECIFICATION

(11) **EP 4 371 308 B1**
(45) Date of publication and mention of the grant of the patent: **10.09.2025**
(21) Application number: 22801260.5
(22) Date of filing: 04.10.2022
(51) Int. Cl.: H04N 23/45, H04N 23/951, G06T 5/50

(54) **CAMERA SYSTEM INCLUDING A MONOCHROME CAMERA AND A COLOR CAMERA HAVING GLOBAL SHUTTER SENSORS**
KAMERASYSTEM MIT EINER MONOCHROMEN KAMERA UND EINER FARBKAMERA, DEREN SENSOREN EINE GLOBALE BLENDE HABEN.
SYSTÈME DE CAMÉRAS COMPRENANT UNE CAMÉRA MONOCHROME ET UNE CAMÉRA COULEUR, DONT LES CAPTEURS SONT À OBTURATION GLOBALE.

(43) Date of publication of application: 22.05.2024
(73) Proprietor: GOOGLE LLC, Mountain View CA 94043 (US)
(72) Inventor: MARTIN, David, Mountain View, California 94043 (US)
(74) Representative: Chettle, John Edward
(86) International application number: PCT/US2022/045659
(87) International publication number: WO 2024/076338

(56) References cited:
- WO-A1-98/15126
- US-A1- 2013 016 251
- US-A1- 2016 323 518
- US-A1- 2017 318 222
- US-A1- 2021 067 689

## Description

### FIELD

The disclosure relates generally to camera systems. More particularly, the disclosure relates to a camera system including a monochrome camera having a global shutter sensor and a color camera having a global shutter sensor, whose images are used in combination to produce an image with minimal visual artifacts.

### BACKGROUND

Rolling shutter red-green-blue (RGB) cameras are sometimes used to collect imagery of an environment. Under certain environmental conditions (e.g., in lower light conditions), a length of an integration time is limited to limit motion blur, however this can cause noisy and under-exposed images to be produced. On the other hand, an integration time of a rolling shutter RGB camera cannot be too short or banding artifacts from artificial lighting (e.g., flickering caused due to alternating current and/or dimmer controls that vary a duty cycle) can be encountered. Therefore, an integration time for a rolling shutter RGB camera in which operation of the RGB camera is feasible can be narrow.

Patent application US 2017/318222 A1 discloses a camera system which captures a monochrome image and a colour image with two separate cameras. The parallax between the images is measured. The colour of the colour image is transferred to the monochrome image, either processed or unprocessed.

Patent application US 2016/323518 A1 discloses a camera system which captures a monochrome image and a colour image with two separate cameras. The images are warped and combined.

Patent application US 2021/067689 A1 discloses a camera system which captures a monochrome image and a colour image with two separate cameras. The systems determines the occlusions between the images. Depending on which image has more occlusions, the other image is used as the base image in which to fuse the first image to generate a composite result.

### SUMMARY

Aspects and advantages of embodiments of the disclosure will be set forth in part in the following description, or can be learned from the description, or can be learned through practice of the example embodiments.

The invention provides a camera system as defined in appended claim 1.

In some implementations, the monochrome camera and the color camera are synchronized to capture the first image and the second image at a substantially same time.

In some implementations, each of the first image and the second image are captured when a peak lighting condition occurs in an environment in which the monochrome camera and the color camera are disposed.

In some implementations, the monochrome camera and the color camera are disposed to face in a same direction and are disposed less than a threshold distance from each other. For example, the threshold distance is ten centimeters or less.

The one or more processors are configured to provide the color information of the second image to the first image by transferring color information of portions of the second image to corresponding portions of the first image for those portions of the second image which are aligned to corresponding portions of the first image.

The one or more processors are configured to identify non-aligned portions of the first image for which portions of the second image are not aligned to corresponding portions of the first image, and to apply synthesized color information to the non-aligned portions of the first image.

In some implementations, the color camera is a red-green-blue (RGB) camera.

In some implementations, the color camera has a lower resolution than the monochrome camera.

In some implementations, the monochrome camera has a larger size than the color camera.

In some implementations, the first image includes a luma component, and the third image includes the luma component of the first image and a chroma component based on the second image.

In some implementations, the camera system includes a first machine learning resource to align the second image to the first image, and a second machine learning resource to synthesize color information for non-aligned portions of the first image for which portions of the second image are not aligned to corresponding portions of the first image, and to apply the synthesized color information to the non-aligned portions of the first image.

The invention provides a computer-implemented method for a camera system as defined in appended claim 10.

In some implementations, the first image includes a single channel having a luma component, and the third image includes at least three channels including a first channel having the luma component and a plurality of channels including chroma components based on the second image.

In some implementations, the monochrome camera and the color camera are synchronized to capture the first image and the second image at a substantially same time, and capturing each of the first image and the second image occurs at a peak of an illumination cycle.

In some implementations, the color camera and the monochrome camera have a substantially same field of view.

In some implementations, a difference between a time at which the color camera captures the second image and a time at which the monochrome camera captures the first image is less than an integration time of the monochrome camera.

Providing the color information of the second image to the first image comprises transferring color information of portions of the second image to corresponding portions of the first image for those portions of the second image which are aligned to corresponding portions of the first image.

The method includes identifying non-aligned portions of the first image for which portions of the second image are not aligned to corresponding portions of the first image, synthesizing, by a machine learning resource, color information for the non-aligned portions of the first image, and applying the synthesized color information to the non-aligned portions of the first image.

The invention provides a non-transitory computer-readable medium which stores instructions that are executable by one or more processors of a camera system, as defined in appended claim 15.

The non-transitory computer-readable medium may store additional instructions to execute other aspects and operations of the camera system and computer-implemented method as described herein.

These and other features, aspects, and advantages of various embodiments of the disclosure will become better understood with reference to the following description, drawings, and appended claims. The accompanying drawings, which are incorporated in and constitute a part of this specification, illustrate examples of the disclosure and, together with the description, serve to explain the related principles.

### BRIEF DESCRIPTION OF THE DRAWINGS

Detailed discussion of example embodiments directed to one of ordinary skill in the art is set forth in the specification, which makes reference to the appended drawings, in which:
FIG. 1 is an example system including block diagrams of a system including a camera system, a server computing system, and one or more external computing devices, according to one or more examples of the disclosure.
FIGS. 2A-2B are example illustrations of camera systems, according to one or more examples of the disclosure.
FIG. 3 is an example illustration of one or more aspects of a camera system, according to one or more examples of the disclosure.
FIG. 4 is an example illustration of one or more aspects of a camera system, according to one or more examples of the disclosure.
FIG. 5 is a flow diagram of an example, non-limiting computer-implemented method according to one or more examples of the disclosure.

### DETAILED DESCRIPTION

Reference now will be made to embodiments of the disclosure, one or more examples of which are illustrated in the drawings. Each example is provided by way of explanation of the disclosure and is not intended to limit the disclosure.

Terms used herein are used to describe the example embodiments and are not intended to limit and / or restrict the disclosure. The singular forms "a," "an" and "the" are intended to include the plural forms as well, unless the context clearly indicates otherwise. In this disclosure, terms such as "including", "having", "comprising", and the like are used to specify features, numbers, steps, operations, elements, components, or combinations thereof, but do not preclude the presence or addition of one or more of the features, elements, steps, operations, elements, components, or combinations thereof.

It will be understood that, although the terms first, second, third, etc., may be used herein to describe various elements, the elements are not limited by these terms. Instead, these terms are used to distinguish one element from another element. For example, without departing from the scope of the disclosure, a first element may be termed as a second element, and a second element may be termed as a first element.

The term "and / or" includes a combination of a plurality of related listed items or any item of the plurality of related listed items. For example, the scope of the expression or phrase "A and/or B" includes the item "A", the item "B", and the combination of items "A and B".

In addition, the scope of the expression or phrase "at least one of A or B" is intended to include all of the following: (1) at least one of A, (2) at least one of B, and (3) at least one of A and at least one of B. Likewise, the scope of the expression or phrase "at least one of A, B, or C" is intended to include all of the following: (1) at least one of A, (2) at least one of B, (3) at least one of C, (4) at least one of A and at least one of B, (5) at least one of A and at least one of C, (6) at least one of B and at least one of C, and (7) at least one of A, at least one of B, and at least one of C.

Examples of the disclosure are directed to a camera system which can generate or produce a high-performance image in a full diversity of environments (e.g., at ground level), including indoor and outdoor spaces, and in natural and artificial light environments. For example, artificial lights that flash due to alternating current, duty cycles of lights such as light emitting diodes, duty cycles of dimmer circuits, etc., can cause banding in images generated or produced by other methods such as images generated by rolling shutter cameras.

The camera system includes a monochrome camera, having a global shutter, which is configured to capture a first image of a scene, and a color camera, disposed separately from the monochrome camera and having a global shutter, configured to capture a second image of the scene. The camera system includes one or more processors configured to align the first image with the second image and provide color information of the second image to the first image to obtain a third image representing the scene.

For example, global shutters operate by exposing a whole scene from one side of the sensor to the other all at once. Cameras having a global shutter may have less warping or distortion. In contrast, rolling shutters operate by having pixels from one side of the sensor switch on and sweep across to the other side of the sensor in a scan-like fashion. A camera having a global shutter may not produce an image with as high of a resolution as a camera having a rolling shutter. However, a camera having a rolling shutter may suffer from motion artifacts including spatial distortion and banding.

The camera system includes a monochrome camera having a global shutter and a color camera (e.g., a multi-chromatic camera such as a RGB camera) having a global shutter. Because the monochrome camera and color camera utilize global shutters, banding artifacts can be avoided and a shorter integration time can enable motion blur to be limited. To increase a sensitivity of the camera system, the monochrome camera utilizes a monochrome sensor. For example, a color filter array (CFA) in typical RGB cameras reduces camera sensitivity by about 2.5 times. By removing the CFA and capturing an image using only a monochrome sensor, a speed of a camera may be increased (e.g., by 2.5 times compared to a typical RGB camera) and a linear resolution of the camera may be increased (e.g., by about 1.5-2 times in units of pixels compared to a typical RGB camera). For example, in some implementations the monochrome sensor may have a resolution of 10 to 20 megapixels. Furthermore, the camera sensitivity of the camera can be increased by 2 to 2.5 times.

Generally, pixels from an image captured using a global shutter camera have a lower dynamic range than pixels from an image captured using a rolling shutter camera, as global shutter pixels are more complex and have less volume to collect and hold charge from a detected photon. For example, a dynamic range (i.e., the "well capacity" which reflects a contrast ratio between the maximum and minimum measurable light intensities) of a global shutter pixel may be about 1 bit less than a similar size rolling shutter pixel. According to examples of the disclosure, to increase a dynamic range of the camera system the monochrome camera includes a monochrome sensor which has an increased linear resolution. The camera system can be implemented to capture a wider diversity of environments (e.g., indoors, and outdoors) under a wider range of lighting conditions.

Color is provided by using a secondary global shutter color camera. For example, the color camera may be a RGB camera. For example, the color camera has a lower resolution than the monochrome camera. For example, the color camera may have 1/2 to 1/16 the resolution (e.g., in pixel count) of the monochrome camera. Because the color camera is configured to have a lower resolution, the color camera does not add significantly to the size, cost, or data rate of the camera system. For example, the monochrome and color cameras may include f-theta (fisheye) lenses with a wide (e.g., greater than 120 degrees) fields of view.

In some implementations, the monochrome camera and color camera may have the same field of view. The monochrome camera and color camera may be configured to face in a same direction to capture the same scene. Static parallax between the monochrome camera and color camera may be minimized by locating the monochrome and color cameras within centimeters of each other (e.g., three centimeters to ten centimeters, such as less than five centimeters).

A computational process (e.g., a machine learning algorithm implemented by a machine learning resource) aligns the low-resolution color (e.g., RGB) image to the high-resolution monochrome image. For example, the alignment process may include converting the color image to a monochrome image and computing alignment and confidence fields between the monochrome image from the monochrome camera and the converted monochrome image. The alignment process may be performed by the camera system or remotely performed (e.g., by a server computing system). For example, the alignment process may be performed using known alignment methods. The alignment process may be performed in real-time or may be performed as part of a post-processing procedure.

A computational process (e.g., a machine learning algorithm implemented by a machine learning resource) transfers color from the low-resolution color (RGB) image to the high-resolution monochrome image for portions of the high-resolution monochrome image where alignment succeeds. Color is transferred (e.g., interpolated) from portions of the low-resolution color (RGB) image which correspond to portions of the high-resolution monochrome image where alignment succeeds. For example, the transfer or merge operation may include producing lower (e.g., half-resolution) chroma (e.g., CbCr) channels for the high-resolution monochrome image (having a Y or luma component).

A computational process (e.g., a machine learning algorithm implemented by a machine learning resource) synthesizes (generates) a color for portions of the high-resolution monochrome image where the alignment fails (e.g., due to occlusion or poor signal-to-noise ratio). Alignment may be considered to fail when a confidence level with respect to the alignment is less than a threshold level. Color is synthesized (e.g., generated) for portions of the high-resolution monochrome image where alignment does not succeed, by referencing a color of a portion of the monochrome image which neighbors the non-aligned portion, or may be synthesized using a machine learning resource which synthesizes the color using a neural network which has been trained to synthesize the color. In some implementations, the luma component of the monochrome image is left unaltered. That is, only chromatic channels are synthesized. For example, the chromatic channels may be synthesized at half the resolution of the color image.

The camera system generates a resulting image (e.g., a third image) based on the monochrome image and the color image (e.g., based on the luma component of the monochrome image and the chromatic components of the color image) according to the color information transferred to the portions of the high-resolution monochrome image where alignment succeeds, and according to the color information synthesized where alignment does not succeed.

In some implementations, a computational process (e.g., a machine learning algorithm implemented by a machine learning resource such as a trained neural network) can optimize the entire process end-to-end, so that the input to the network is the two source images (i.e., the monochrome image and the color image), and the output is the synthesized high-resolution RGB image. In this implementation, there are not discrete alignment and color transfer operations, as the neural network implements the process end-to-end with the alignment performed internally and implicitly.

Because the monochrome and color cameras are both global shutter cameras, they may be strongly synchronized in time (e.g., the monochrome and color cameras may each capture an image of the scene simultaneously) so as to avoid motion parallax, and with aligned fields-of-view, alignment is likely to fail only where static parallax exists, which can be minimized as discussed above by locating the monochrome and color cameras within centimeters of each other. In addition, the color (e.g., RGB) camera can have a slightly larger field of view than the monochrome camera, to ensure that more boundary pixels in the monochrome image have associated pixels in the color (e.g., RGB) image.

The camera system disclosed herein may be implemented in any electronic apparatus which can accommodate two or more cameras. For example, the camera system may be implemented in a smartphone, a security system, a surveillance system, a vehicle, and the like.

The color camera may capture an image in any color space. The image generated based on the monochrome image and the color image may be represented by any color space. For example, the color space may include RGB (red, green, and blue additive primaries), YCbCr (luma component, blue-difference chroma component, red-difference chroma component), HSV (hue, saturation, value), YUV (luminance, blue projection, red projection), L*a*b* (lightness value, green-red opponent channel, and yellow-blue opponent channel), and the like.

Example aspects of the disclosure provide several technical effects, benefits, and/or improvements in camera system technology. For example, according to the examples disclosed herein, the camera system has expanded operations and capabilities, as the camera will operate in more diverse environments. Therefore, it is unnecessary to have separate indoor and outdoor cameras. For example, pose algorithms and three-dimensional reconstruction algorithms have increased accuracy and increased quality when the underlying image(s) are captured using a global shutter camera. The camera system disclosed herein can be used to map a wider diversity of environments under a wider range of lighting conditions such that imagery can be collected in more environments and have larger operational envelopes. Furthermore, the camera system can be made to be smaller, lighter, and more portable (e.g., by utilizing a color camera which is smaller than the monochrome camera).

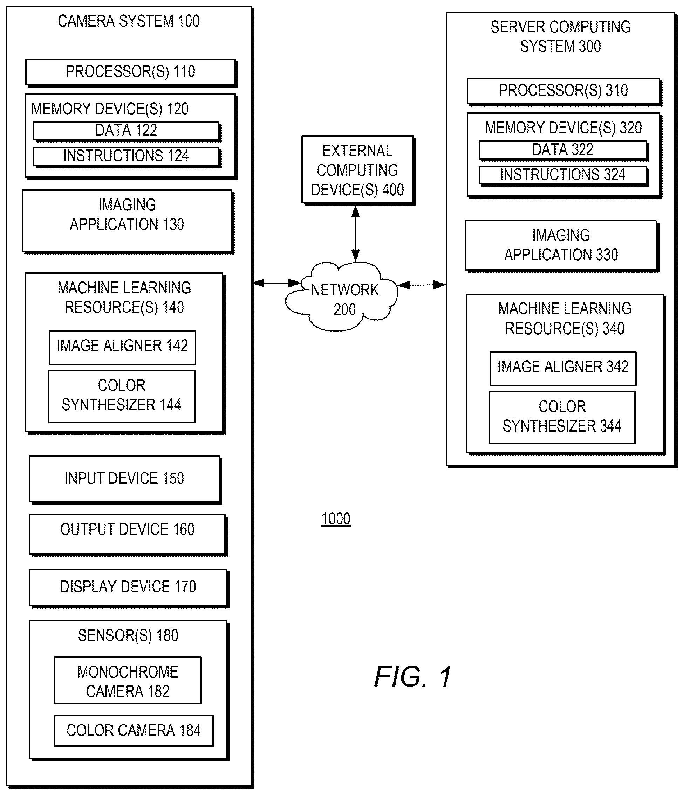

Referring now to the drawings, FIG. 1 illustrates block diagrams of a system including a camera system, a server computing system, and one or more external computing devices, according to one or more examples of the disclosure. In FIG. 1, the example system 1000 includes a camera system 100, a server computing system 300, and one or more external computing devices 400 which are connected with one another over a network 200. Any communications interfaces suitable for communicating via the network 200 (such as a network interface card) may be utilized as appropriate or desired by the camera system 100, server computing system 300, and one or more external computing devices 400.

The camera system 100 may include, for example, any electronic apparatus which can accommodate two or more cameras. For example, the camera system may be implemented in a smartphone, a security system, a surveillance system, a vehicle, and the like. The server computing system 300 may include a server, or a combination of servers (e.g., a web server, application server, etc.) in communication with one another, for example in a distributed fashion. The one or more external computing devices 400 may include a personal computer, a smartphone, a laptop, a tablet computer, and the like.

According to some implementations of the disclosure, the camera system 100 may communicate with the server computing system 300 to generate a third image based on a first image captured by a monochrome camera 182 and a second image captured by a color camera 184. The server computing system 300 aligns the first and second images and/or to synthesize color information for generating the third image.

According to some implementations of the disclosure, the camera system 100 may communicate with the server computing system 300 to execute an imaging application 330 which may be used to activate or control the monochrome camera 182 and/or color camera 184.

According to some implementations of the disclosure, the camera system 100 may communicate with the one or more external computing devices 400 to execute an imaging application to activate or control the monochrome camera 182 and/or color camera 184, to align the first and second images, and/or to synthesize color information for generating the third image. As examples, the one or more external computing devices 400 may include a home appliance such as a home security system or a vehicle or a smartphone.

For example, the network 200 may include any type of communications network such as a local area network (LAN), wireless local area network (WLAN), wide area network (WAN), personal area network (PAN), virtual private network (VPN), or the like. For example, wireless communication between elements of the examples described herein may be performed via a wireless LAN, Wi-Fi, Bluetooth, ZigBee, Wi-Fi direct (WFD), ultra wideband (UWB), infrared data association (IrDA), Bluetooth low energy (BLE), near field communication (NFC), a radio frequency (RF) signal, and the like. For example, wired communication between elements of the examples described herein may be performed via a pair cable, a coaxial cable, an optical fiber cable, an Ethernet cable, and the like. Communication over the network can use a wide variety of communication protocols (e.g., TCP/IP, HTTP, SMTP, FTP), encodings or formats (e.g., HTML, XML), and/or protection schemes (e.g., VPN, secure HTTP, SSL).

The camera system 100 includes one or more processors 110, one or more memory devices 120, an imaging application 130, a machine learning resource 140, an input device 150, an output device 160, a display device 170, and one or more sensors 180. Each of the components of the camera system 100 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The server computing system 300 may include one or more processors 310, one or more memory devices 320, an imaging application 330, and one or more machine learning resources 340. Each of the features of the server computing system 300 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The one or more external computing devices 400 may include similar structural features as the server computing system 300 (e.g., one or more processors 310, one or more memory devices 320, an imaging application 330, and one or more machine learning resources 340). Therefore, a description of these features in the context of the one or more external computing devices will not be repeated again for the sake of brevity.

For example, the one or more processors 110, 310 can be any suitable processing device that can be included in a camera system 100 or in the server computing system 300. For example, the one or more processors 110, 310 may include one or more of a processor, processor cores, a controller and an arithmetic logic unit, a central processing unit (CPU), a graphics processing unit (GPU), a digital signal processor (DSP), an image processor, a microcomputer, a field programmable array, a programmable logic unit, an application-specific integrated circuit (ASIC), a microprocessor, a microcontroller, etc., and combinations thereof, including any other device capable of responding to and executing instructions in a defined manner. The one or more processors 110, 310 can be a single processor or a plurality of processors that are operatively connected, for example in parallel.

The one or more memory devices 120, 320 can include one or more non-transitory computer-readable storage mediums, such as such as a Read Only Memory (ROM), Programmable Read Only Memory (PROM), Erasable Programmable Read Only Memory (EPROM), and flash memory, a USB drive, a volatile memory device such as a Random Access Memory (RAM), an internal or external hard disk drive (HDD), floppy disks, a blue-ray disk, or optical media such as CD ROM discs and DVDs, and combinations thereof. However, examples of the one or more memory devices 120, 320 are not limited to the above description, and the one or more memory devices 120, 320 may be realized by other various devices and structures as would be understood by those skilled in the art.

For example, the one or more memory devices 120 can store instructions, that when executed by the one or more processors 110, execute one or more operations of the imaging application 130 to: cause a monochrome camera 182 having a global shutter to capture a first image of a scene, cause a color camera 184, having a global shutter and being spaced apart from the monochrome camera 182 by less than a threshold distance, to capture a second image of the scene, the second image having a lower resolution than the first image, align the second image to the first image, and obtain a third image representing the scene by providing color information of the second image to the first image, as described according to examples of the disclosure.

For example, the one or more memory devices 320 can store instructions, that when executed by the one or more processors 310, execute one or more operations of the imaging application 330 to: cause a monochrome camera 182 having a global shutter to capture a first image of a scene, cause a color camera 184, having a global shutter and being spaced apart from the monochrome camera 182 by less than a threshold distance, to capture a second image of the scene, the second image having a lower resolution than the first image, align the second image to the first image, and obtain a third image representing the scene by providing color information of the second image to the first image, as described according to examples of the disclosure.

The one or more memory devices 120 can also include data 122 and instructions 124 that can be retrieved, manipulated, created, or stored by the one or more processors 110. **In** some examples, such data can be accessed and used as input to execute one or more operations of the imaging application 130 to: cause a monochrome camera 182 having a global shutter to capture a first image of a scene, cause a color camera 184, having a global shutter and being spaced apart from the monochrome camera 182 by less than a threshold distance, to capture a second image of the scene, the second image having a lower resolution than the first image, align the second image to the first image, and obtain a third image representing the scene by providing color information of the second image to the first image, as described according to examples of the disclosure.

The one or more memory devices 320 can also include data 322 and instructions 324 that can be retrieved, manipulated, created, or stored by the one or more processors 310. **In** some examples, such data can be accessed and used as input to execute one or more operations of the imaging application 330 to: cause a monochrome camera 182 having a global shutter to capture a first image of a scene, cause a color camera 184, having a global shutter and being spaced apart from the monochrome camera 182 by less than a threshold distance, to capture a second image of the scene, the second image having a lower resolution than the first image, align the second image to the first image, and obtain a third image representing the scene by providing color information of the second image to the first image, as described according to examples of the disclosure.

The imaging application 130 and imaging application 330 can include any application which is used to capture one or more images. For example, the captured images may be used in association with a security application, a surveillance application, a navigation application, a geo-mapping application, and the like. For example, the images may be captured using one or more of the monochrome camera 182 and the color camera 184. Image information obtained from images captured by the monochrome camera 182 and the color camera 184 can be used to generate another image, as described according to examples of the disclosure herein.

In some implementations, the camera system 100 can include one or more machine learning resources 140. For example, the one or more memory devices 120 can store or include one or more models including an image aligner 142 and a color synthesizer 144. For example, the image aligner 142 and color synthesizer 144 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models).

In some implementations, the input to the image aligner 142 and color synthesizer 144 can include image data, for example, from images captured by the monochrome camera 182 and the color camera 184. The image aligner 142 and color synthesizer 144 can process the image data to generate an output. As an example, the image aligner 142 can process the image data from images captured by the monochrome camera 182 and the color camera 184 to generate an image alignment output (e.g., an alignment or mapping of the image data between the images captured by the monochrome camera 182 and the color camera 184) which determines whether certain portions of the image captured by the color camera 184 are aligned with certain portions of the image captured by the monochrome camera 182. As another example, the color synthesizer 144 can process the image data to generate an output. As an example, the color synthesizer 144 can process image data which corresponds to portions of the image captured by the monochrome camera 182 which are not aligned with portions of the image captured by the color camera 184 as determined by the image aligner 142. The color synthesizer 144 can process image data which corresponds to portions of the image captured by the monochrome camera 182 which are not aligned, by synthesizing color information for the non-aligned portions.

In some implementations, the server computing system 300 includes one or more machine learning resources 340 including an image aligner 342 and a color synthesizer 344. For example, processing of image data from images captured by the monochrome camera 182 and the color camera 184 may be performed remotely by the server computing system 300, for example, by the image aligner 342 and/or the color synthesizer 344. Features and operations of the image aligner 342 and color synthesizer 344 may correspond to the same features and operations of the image aligner 142 and color synthesizer 144 described herein, respectively. Therefore, a description of the features and operations of the image aligner 342 and color synthesizer 344 in the context of the server computing system 300 will not be repeated again for the sake of brevity.

The camera system 100 may include an input device 150 configured to receive an input from a user and may include, for example, one or more of a keyboard (e.g., a physical keyboard, virtual keyboard, etc.), a mouse, a joystick, a button, a switch, an electronic pen or stylus, a gesture recognition sensor (e.g., to recognize gestures of a user including movements of a body part), an input sound device or voice recognition sensor (e.g., a microphone to receive a voice command), a track ball, a remote controller, a portable (e.g., a cellular or smart) phone, and so on. The input device 150 may also be embodied by a touch-sensitive display device having a touchscreen capability, for example. The input device 150 may be used by a user of the camera system 100 to provide an input to execute the imaging application 130. The input device 150 may also be used by a user of the camera system 100 to provide an input to cause the monochrome camera 182 and/or color camera 184 to capture an image of a scene. For example, the input may be a voice input, a touch input, a gesture input, a click via a mouse or remote controller, and so on.

The camera system 100 includes an output device 160 configured to provide an output to the user and may include, for example, one or more of an audio device (e.g., one or more speakers), a haptic device to provide haptic feedback to a user (e.g., vibration device 166), a light source (e.g., one or more light sources such as LEDs which provide visual feedback to a user), and the like.

The camera system 100 includes a display device 170 which presents information viewable by the user, for example on a user interface (e.g., a graphical user interface). For example, the display device 170 may be a non-touch sensitive display. The display device 170 may include a liquid crystal display (LCD), a light emitting diode (LED) display, an organic light emitting diode (OLED) display, active matrix organic light emitting diode (AMOLED), flexible display, 3D display, a plasma display panel (PDP), a cathode ray tube (CRT) display, and the like, for example. However, the disclosure is not limited to these examples and may include other types of display devices. For example, the display device 170 may be configured to provide a graphical user interface by which the user can select various options with respect to the imaging application 130 (e.g., options by which the user can define conditions for controlling the monochrome camera 182 and/or color camera 184 to capture an image of a scene).

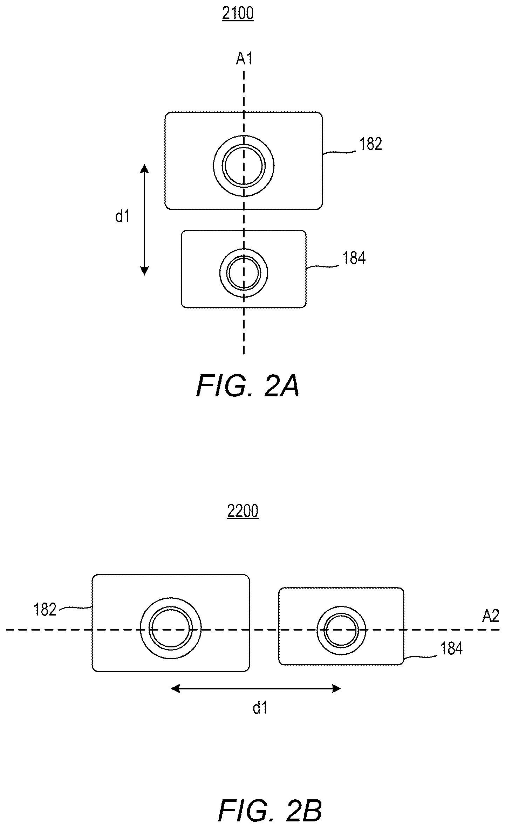

The camera system 100 includes one or more sensors 180. The one or more sensors 180 includes the monochrome camera 182 and the color camera 184. For example, the monochrome camera 182 and the color camera 184may be arranged adjacent to one another in a vertical or a horizontal direction. Referring to FIGS. 2A-2B, example illustrations of camera systems, according to one or more examples of the disclosure are illustrated.

For example, in FIG. 2A camera system 2100 illustrates a monochrome camera 182 disposed above a color camera 184, in which the monochrome camera 182 is spaced apart from the color camera 184 by a distance d1. The distance d1 may correspond to about 3 centimeters to 10 centimeters, for example, less than 5 centimeters. The monochrome camera 182 and the color camera 184 may be aligned along an axis A1 and face in a same direction. In some implementations, the monochrome camera 182 may be larger in size than the color camera 184. In some implementations, the monochrome camera 182 may be disposed below the color camera 184.

For example, in FIG. 2B camera system 2200 illustrates a monochrome camera 182 disposed to the left of a color camera 184, in which the monochrome camera 182 is spaced apart from the color camera 184 by the distance d1. The distance d1 may correspond to about 3 centimeters to 10 centimeters, for example, less than 5 centimeters. The monochrome camera 182 and the color camera 184 may be aligned along an axis A2 and face in a same direction. In some implementations, the monochrome camera 182 may be disposed to the right of the color camera 184.

The camera system 100 may include other types of sensors. For example, the one or more sensors 180 may include other sensors such as an inertial measurement unit which includes one or more accelerometers and/or one or more gyroscopes. The one or more accelerometers may be used to capture motion information with respect to the camera system 100. The one or more gyroscopes may also be used additionally, or alternatively, to capture motion information with respect to the camera system 100. The one or more sensors 180 may also include other sensors such as a magnetometer, GPS sensor, and the like.

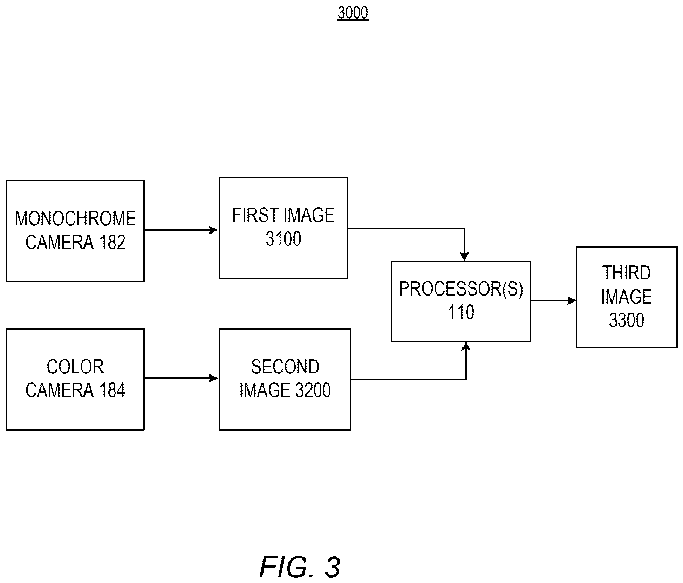

Referring to FIG. 3, one or more aspects of a camera system is illustrated according to one or more examples of the disclosure. In FIG. 3, the camera system 3000 includes the one or more processors 110, the monochrome camera 182, the color camera 184, first image 3100, second image 3200, and third image 3300.

The monochrome camera 182 is configured to capture a first image 3100 of a scene and the color camera 184 is configured to capture a second images 3200 of the scene. The one or more processors 110 are configured to receive the first image 3100 and the second image 3200 and to perform various operations (such as an alignment of the second image 3200 to the first image 3100 and providing color information of the second image 3200 to the first image 3100, explained in more detail below) to generate the third image 3300 based on the first image 3100 and the second image 3200.

As discussed above, each of the monochrome camera 182 and color camera 184 includes a global shutter and can be synchronized with one another to capture an image of a scene simultaneously or substantially simultaneously (e.g., within one millisecond of each other). For example, the monochrome camera 182 and the color camera 184 may be synchronized to capture the first image 3100 and the second image 3200 at a time when a peak lighting condition occurs in a surrounding environment. For example, each of the first image 3100 and the second image 3200 may be captured at a peak of an illumination cycle in the environment. For example, the peak lighting condition or peak of the illumination cycle may be determined by the camera system 100 observing or monitoring an environment and recognizing the timing of an illumination cycle (e.g., by determining duty cycles of lights such as light emitting diodes or duty cycles of dimmer circuits, or determining a period of an alternating current power source, etc.). For example, a difference between a time at which the color camera 184 captures the second image 3200 and a time at which the monochrome camera 182 captures the first image 3100 may be less than a threshold time. For example, the threshold time may correspond to an integration time of the monochrome camera 182. The integration time corresponds a time interval during which the monochrome camera 182 traps (collects) and retains a charge.

The color camera 184 may be configured to capture a multi-chromatic image in any color space. For example, the color camera 184 may include a color filter array. For example, the color filter array may be a Bayer color filter array for arranging RGB color filters on a square grid (e.g., 2x2) of photosensors (e.g., having a RGGB filter pattern). The color camera 184 may be configured to capture the multi-chromatic image in other color spaces including YCbCr (luma component, blue-difference chroma component, red-difference chroma component), HSV (hue, saturation, value), YUV (luminance, blue projection, red projection), L*a*b* (lightness value, green-red opponent channel, and yellow-blue opponent channel), and the like.

As discussed above, the monochrome camera 182 may be physically larger in size than the color camera 184 and may have a higher resolution than the color camera 184. For example, the resolution of the color camera 184 may be 1/2 to 1/16 the resolution of the monochrome camera 182. One or more of the monochrome camera 182 and the color camera 184 may include a f-theta (fisheye) lens with a wide (e.g., greater than 120 degrees) field of view. The monochrome camera 182 and the color camera 184 may face in a same direction and be aligned with one another to reduce or avoid static parallax. Static parallax between the monochrome camera 182 and color camera 184 may further be minimized by locating the monochrome camera 182 and color camera 184 less than a threshold distance from one another. For example, the monochrome camera 182 and color camera 184 may be located within centimeters of each other (e.g., three centimeters to ten centimeters, such as less than five centimeters).

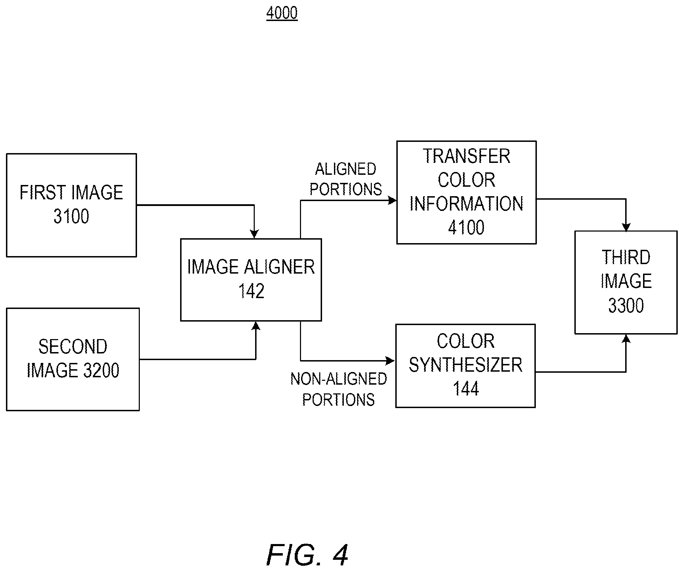

Referring to FIG. 4, one or more aspects of a camera system is illustrated according to one or more examples of the disclosure. In FIG. 4, the camera system 4000 includes the first image 3100, the second image 3200, the image aligner 142, the color synthesizer 144, and the third image 3300, and an operation 4100 of transferring color information. For example, the one or more processors 110 may be configured to utilize or invoke the one or more machine learning resources 140 including the image aligner 142 and the color synthesizer 144 to generate the third image 3300. Though not shown in FIG. 4, in some implementations, the one or more processors 110 may be configured to utilize or invoke one or more machine learning resources 340 from the server computing system 300 including the image aligner 342 and the color synthesizer 344 to generate the third image 3300. For example, the image aligner 342 and the color synthesizer 344 may perform similar operations as the image aligner 142 and color synthesizer 144, respectively, with respect to the first image 3100 and second image 3300.

For example, a computational process (e.g., a machine learning algorithm implemented by the image aligner 142) can align the second image 3200 (which is a relatively low-resolution color image such as an RGB image) to the first image 3100 (which is a relatively high-resolution monochrome image). For example, the image aligner 142 may be configured to perform an alignment process by converting the second image 3200 to a monochrome image and computing alignment and confidence fields between the first image 3100 (which is a monochrome image captured by the monochrome camera 182) and the converted monochrome image. For example, a neural network may be implemented by the image aligner 142 to find corresponding pixels between the first image 3100 and the second image 3200 and assign pixels (i.e., map pixels) between the first image 3100 and the second image 3200. As mentioned above, the alignment process may be performed by the camera system 100 or remotely performed (e.g., by the server computing system 300). For example, the image aligner 142 may be configured to perform the alignment process using known alignment methods. For example, the alignment process may be performed in real-time or may be performed as part of a post-processing procedure.

The image aligner 142 determines that some portions of the second image 3200 are aligned with corresponding portions of the first image 3100. For these aligned portions, the one or more processors 110 and/or the color synthesizer 144 transfers color information from the second image 3200 (i.e., the low-resolution color (RGB) image) to the first image (i.e., the high-resolution monochrome image) for portions of the first image where alignment succeeds. Color information is transferred (e.g., interpolated) from portions of the second image 3200 (i.e., the low-resolution color (RGB) image) which correspond to portions of the first image 3100 (i.e., the high-resolution monochrome image) where alignment succeeds. For example, the transfer or merge operation may include producing lower (e.g., half-resolution) chroma (e.g., CbCr) channels for the first image 3100 (i.e., the high-resolution monochrome image) having a Y or luma component. The Y or luma component of the first image 3100 may retain its resolution and be left unaltered.

The image aligner 142 determines that some portions of the second image 3200 are not aligned with corresponding portions of the first image 3100. For the non-aligned portions of the first image 3100, the one or more processors 110 and/or the color synthesizer 144 synthesize (generate) color information where alignment does not succeed. In some implementations, a computational process (e.g., a machine learning algorithm implemented by the color synthesizer 144) synthesizes (generates) the color information for portions of the first image 3100 (i.e., the high-resolution monochrome image) where the alignment fails (e.g., due to occlusion or poor signal-to-noise ratio). Alignment may be considered to fail when a confidence level with respect to the alignment performed by the image aligner 142 is less than a threshold level (e.g., where pixels of the first image 3100 are not mapped to pixels of the second image 3200 or an uncertainty level with respect to the mapping is greater than a threshold level). For example, color may be synthesized (e.g., generated) for portions of the first image 3100 where alignment does not succeed, by referencing training examples for a neural network, or by referencing a color of a portion of the first image 3100 which neighbors the non-aligned portion. For example, training data for the neural network implemented by the color synthesizer 144 may be obtained by (1) identical RGB cameras capturing a first test image and a second test image of a scene; (2) synthesizing a grayscale image from the first test image to simulate the first image 3100 and reducing a size of the second test image to simulate the second image 3200; and (3) executing the machine learning algorithm to synthesize color information for non-aligned portions between the first test image and the second test image and comparing the synthesized color information to the original first test image (which serves as a ground-truth) such that the machine learning algorithm accurately outputs synthesized color information and/or such that a confidence level of the output synthesized color information is greater than a threshold level. In some implementations, the luma component of the first image 3100 is left unaltered and retains its resolution. That is, only chromatic channels are synthesized, and the resolution of the chromatic channels may be halved. That is, the chromatic channels may be synthesized at half the resolution of the resolution of the second image 3200.

The camera system 4000 generates a resulting image (e.g., a third image 3300) based on the first image 3100 and the second image 3200 (e.g., based on the luma component of the first image 3100 and the chromatic components of the second image 3200) according to the color information transferred to the portions of the first image 3100 where alignment succeeds at operation 4100, and according to the color information synthesized by the color synthesizer 144 where alignment does not succeed for non-aligned portions of the first image 3100.

In some implementations, the camera system 4000 may be configured with a neural network which has been trained to optimize the entire process shown in FIG. 4 such that the input to the network is the first image 3100 and second image 3200 (i.e., the monochrome image and the color image), and the output is the third image 3300 (i.e., the synthesized high-resolution RGB image). In this implementation, the alignment and color transfer operations are not discrete operations, as the neural network implements the process end-to-end with the alignment performed internally and implicitly.

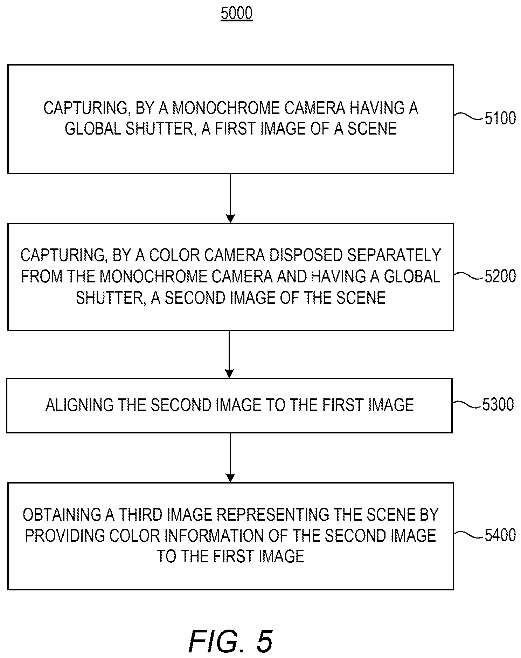

Referring to FIG. 5, a flow diagram of a computer-implemented method according to the invention is illustrated. The flow diagram of FIG. 5 illustrates a method 5000 for generating an image via images captured by a monochrome camera 182 having a global shutter (i.e., a global shutter sensor) and a color camera 184 having a global shutter (i.e., a global shutter sensor).

At 5100, the method includes capturing, by a monochrome camera having a global shutter, a first image of a scene. The monochrome camera 182 has a global shutter and captures an image of a scene. For example, the monochrome camera 182 may be mounted on a vehicle and capture imagery of an environment (e.g., during the night or day and in various lighting conditions including artificial lighting conditions). As another example, the monochrome camera 182 may be implemented in a security system and capture imagery of an environment (e.g., during the night or day and in various lighting conditions including artificial lighting conditions).

At 5200, the method includes capturing, by a color camera having a global shutter, a second image of the scene. The color camera 184 has a global shutter and captures an image of the scene. For example, the color camera 184 may be mounted on a vehicle and capture imagery of an environment (e.g., during the night or day and in various lighting conditions including artificial lighting conditions). As another example, the color camera 184 may be implemented in a security system and capture imagery of an environment (e.g., during the night or day and in various lighting conditions including artificial lighting conditions). The color camera 184 is disposed separately from the monochrome camera 182, however the color camera 184 may be disposed adjacent to the monochrome camera 182 and face in a same direction. For example, to reduce or prevent static parallax between images captured by the monochrome camera 182 and the color camera 184, the monochrome camera 182 and the color camera 184 may be located within centimeters of each other (e.g., three centimeters to ten centimeters, such as less than five centimeters). For example, the monochrome camera 182 and the color camera 184 may be aligned with one another along at least one axis. For example, the monochrome camera 182 and the color camera 184 may be aligned with one another along a vertical axis (e.g., A1 in FIG. 2A) or a horizontal axis (e.g., A2 in FIG. 2B). In addition, the monochrome camera 182 and the color camera 184 may be aligned with one another along a second axis, such as along a depth axis that is perpendicular to the vertical axis and the horizontal axis.

At 5300, the method includes aligning the second image to the first image. For example, the image aligner 142 may implement a computational process. The image aligner 142 aligns the second image 3200 (which is a relatively low-resolution color image such as an RGB image) to the first image 3100 (which is a relatively high-resolution monochrome image) in the manner as discussed with respect to FIG. 4.

At 5400, the method includes obtaining a third image representing the scene by providing color information of the second image to the first image. For example, as discussed with respect to FIG. 4, the image aligner 142 determines that some portions of the second image 3200 are aligned with corresponding portions of the first image 3100. For these aligned portions, the one or more processors 110 and/or the color synthesizer 144 transfer color information from the second image 3200 (i.e., the low-resolution color (RGB) image) to the first image (i.e., the high-resolution monochrome image) for portions of the first image where alignment succeeds. For example, as discussed with respect to FIG. 4, the image aligner 142 determines that some portions of the second image 3200 are not aligned with corresponding portions of the first image 3100. For the non-aligned portions of the first image 3100, the one or more processors 110 and/or the color synthesizer 144 synthesize (generate) color information for those portions of the first image 3100 where alignment does not succeed. The third image 3300 represents the scene and correspond to the first image 3100 having the Y or luma component from the first image 3100 (with the same resolution and being unaltered) and two or more chroma (color) components or channels which are obtained via the second image 3200 according to the alignment process and/or color synthesis process described herein. The two or more chroma components or channels may also have a lower resolution than the resolution of the second image 3200.

Aspects of the above-described example embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks, Blue-Ray disks, and DVDs; magneto-optical media such as optical discs; and other hardware devices that are specially configured to store and perform program instructions, such as semiconductor memory, read-only memory (ROM), random access memory (RAM), flash memory, USB memory, and the like. Examples of program instructions include both machine code, such as produced by a compiler, and files containing higher level code that may be executed by the computer using an interpreter. The program instructions may be executed by one or more processors. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the non-transitory computer-readable storage media may also be embodied in at least one application specific integrated circuit (ASIC) or Field Programmable Gate Array (FPGA).

Each block of the flowchart illustrations may represent a unit, module, segment, or portion of code, which comprises one or more executable instructions for implementing the specified logical function(s).

While the disclosure has been described with respect to various example embodiments, each example is provided by way of explanation, not limitation of the disclosure.

## Claims

1. A camera system, comprising:
a monochrome camera (182), having a global shutter, configured to capture a first image (3100) of a scene;
a color camera (184), disposed separately from the monochrome camera and having a global shutter, configured to capture a second image (3200) of the scene; and
one or more processors (110) configured to:
align the second image to the first image, and
provide color information of the second image to the first image to obtain a third image (3300) representing the scene,
**characterized in that**:
the one or more processors are configured to provide the color information of the second image to the first image by transferring (4100) color information of portions of the second image to corresponding portions of the first image for those portions of the second image which are aligned to corresponding portions of the first image, and
the one or more processors are configured to identify non-aligned portions of the first image for which portions of the second image are not aligned to corresponding portions of the first image, and to apply synthesized color information to the non-aligned portions of the first image.

2. The camera system of claim 1, wherein the monochrome camera and the color camera are synchronized to capture the first image and the second image at a substantially same time.

3. The camera system of claim 2, wherein each of the first image and the second image are captured when a peak lighting condition occurs in an environment in which the monochrome camera and the color camera are disposed.

4. The camera system of any preceding claim, wherein the monochrome camera and the color camera are disposed to face in a same direction and are disposed less than a threshold distance from each other, and optionally wherein the threshold distance is ten centimeters or less.

5. The camera system of any preceding claim, wherein the color camera is a red-green-blue (RGB) camera.

6. The camera system of any preceding claim, wherein the color camera has a lower resolution than the monochrome camera.

7. The camera system of any preceding claim, wherein the monochrome camera has a larger size than the color camera.

8. The camera system of any preceding claim, wherein
the first image includes a luma component, and
the third image includes the luma component of the first image and a chroma component based on the second image.

9. The camera system of any preceding claim, further comprising:
a first machine learning resource to align the second image to the first image, and a second machine learning resource to synthesize color information for non-aligned portions of the first image for which portions of the second image are not aligned to corresponding portions of the first image, and to apply the synthesized color information to the non-aligned portions of the first image.

10. A computer-implemented method, comprising the steps:
capturing (5100), by a monochrome camera (182) having a global shutter, a first image (3100) of a scene;
capturing (5200), by a color camera (184) disposed separately from the monochrome camera and having a global shutter, a second image (3200) of the scene;
aligning (5300) the second image to the first image;
obtaining (5400) a third image (3300) representing the scene by providing color information of the second image to the first image,
**characterized in that**
providing the color information of the second image to the first image comprises transferring (4100) color information of portions of the second image to corresponding portions of the first image for those portions of the second image which are aligned to corresponding portions of the first image;
and the method further comprises:
identifying non-aligned portions of the first image for which portions of the second image are not aligned to corresponding portions of the first image;
synthesizing, by a machine learning resource, color information for the non-aligned portions of the first image; and
applying the synthesized color information to the non-aligned portions of the first image.

11. The method of claim 10, wherein
the first image includes a single channel having a luma component, and
the third image includes at least three channels including a first channel having the luma component and a plurality of channels including chroma components based on the second image.

12. The method of claim 10 or 11, wherein
the monochrome camera and the color camera are synchronized to capture the first image and the second image at a substantially same time, and
capturing each of the first image and the second image occurs at a peak of an illumination cycle.

13. The method of claim 12, wherein the color camera and the monochrome camera have a substantially same field of view.

14. The method of any of claims 10 to 13, wherein a difference between a time at which the color camera captures the second image and a time at which the monochrome camera captures the first image is less than an integration time of the monochrome camera.

15. A non-transitory computer-readable medium storing instructions which, when executed by one or more processors of a camera system, cause the one or more processors to perform the method of any of claims 10 to 14.

## Patentansprüche

1. Kamerasystem, umfassend:
eine Monochromkamera (182) mit einem globaler Verschluss, der konfiguriert ist, um ein erstes Bild (3100)einer Szene zu erfassen;
eine Farbkamera (184), die separat von der Monochromkamera angeordnet ist und einen globalen Verschluss aufweist, der konfiguriert ist, um ein zweites Bild (3200)der Szene zu erfassen;
und einen oder mehrere Prozessoren (110), die konfiguriert sind zum:
Ausrichten des zweiten Bildes am ersten Bild, und
Bereitstellen von Farbinformationen des zweiten Bildes für das erste Bild, um ein drittes Bild (3300) zu erhalten, das die Szene darstellt, **dadurch gekennzeichnet, dass**:
der eine oder die mehreren Prozessoren konfiguriert sind, um die Farbinformationen des zweiten Bildes für das erste Bild bereitzustellen, indem sie Farbinformationen von Bereichen des zweiten Bildes auf entsprechende Bereiche des ersten Bildes für jene Bereiche des zweiten Bildes übertragen (4100), die auf entsprechende Bereiche des ersten Bildes ausgerichtet sind, und
der eine oder die mehreren Prozessoren konfiguriert sind, um nicht ausgerichtete Bereiche des ersten Bildes zu identifizieren, für die Bereiche des zweiten Bildes nicht auf entsprechende Bereiche des ersten Bildes ausgerichtet sind, und um synthetisierte Farbinformationen auf die nicht ausgerichteten Bereiche des ersten Bildes anzuwenden.

2. Kamerasystem nach Anspruch 1, wobei die Monochromkamera und die Farbkamera synchronisiert sind, um das erste Bild und das zweite Bild im Wesentlichen zur gleichen Zeit zu erfassen.

3. Kamerasystem nach Anspruch **2,** wobei jedes von dem ersten Bild und dem zweiten Bild erfasst wird, wenn eine maximale Beleuchtungsbedingung in einer Umgebung auftritt, in der die Monochromkamera und die Farbkamera angeordnet sind.

4. Kamerasystem nach einem der vorhergehenden Ansprüche, wobei die Monochromkamera und die Farbkamera so angeordnet sind, dass sie in die gleiche Richtung weisen, und in einem Abstand von weniger als einem Schwellenwertabstand voneinander angeordnet sind und wobei optional der Schwellenwertabstand zehn Zentimeter oder weniger beträgt.

5. Kamerasystem nach einem der vorhergehenden Ansprüche, wobei die Farbkamera eine Rot-Grün-Blau- **(RGB-)** Kamera ist.

6. Kamerasystem nach einem der vorhergehenden Ansprüche, wobei die Farbkamera eine geringere Auflösung als die Monochromkamera aufweist.

7. Kamerasystem nach einem der vorhergehenden Ansprüche, wobei die Monochromkamera eine größere Abmessung als die Farbkamera aufweist.

8. Kamerasystem nach einem der vorhergehenden Ansprüche, wobei das erste Bild eine Luminanz-Komponente enthält, und
das dritte Bild die Luminanz-Komponente des ersten Bildes und eine auf dem zweiten Bild basierende Chrominanz-Komponente enthält.

9. Kamerasystem nach einem der vorhergehenden Ansprüche, ferner umfassend:
eine erste Maschinelle-Lern-Ressource zum Ausrichten des zweiten Bildes am ersten Bild, und eine zweite Maschinelle-Lern-Ressource zum Synthetisieren von Farbinformationen für nicht ausgerichtete Bereiche des ersten Bildes, für die Bereiche des zweiten Bildes nicht auf entsprechende Bereiche des ersten Bildes ausgerichtet sind, und zum Anwenden der synthetisierten Farbinformationen auf die nicht ausgerichteten Bereiche des ersten Bildes.

10. Computerimplementiertes Verfahren, umfassend die Schritte:
Erfassen (5100), durch eine Monochromkamera (182) mit einem globalen Verschluss, eines ersten Bildes (3100) einer Szene;
Erfassen (5200), durch eine Farbkamera (184), die separat von der Monochromkamera angeordnet ist und
einen globaler Verschluss aufweist, eines zweiten Bildes (3200) der Szene; Ausrichten (5300) des zweiten Bildes am ersten Bild;
Erhalten (5400) eines dritten Bildes (3300),
das die Szene darstellt, durch Bereitstellen von Farbinformationen des zweiten Bildes für das erste Bild, **dadurch gekennzeichnet, dass**
das Bereitstellen der Farbinformationen des zweiten Bildes für das erste Bild das Übertragen (4100) von
Farbinformationen von Bereichen des zweiten Bildes auf entsprechende Bereiche des ersten Bildes für jene Bereiche des zweiten Bildes umfasst, die auf entsprechende Bereiche des ersten Bildes ausgerichtet sind;
und das Verfahren ferner umfasst:
Identifizieren von nicht ausgerichteten Bereichen des ersten Bildes, für die Bereiche des zweiten Bildes nicht auf entsprechende Bereiche des ersten Bildes ausgerichtet sind;
Synthetisieren, durch eine Maschinelle-Lern-Ressource, von Farbinformationen für die nicht ausgerichteten Bereiche des ersten Bildes; und
Anwenden der synthetisierten Farbinformationen auf die nicht ausgerichteten Bereiche des ersten Bildes.

11. Verfahren nach Anspruch 10, wobei
das erste Bild einen einzelnen Kanalmit einer Luminanz-Komponente enthält, und
das dritte Bild mindestens drei Kanäle enthält, einschließlich eines ersten Kanals mit der Luminanz-Komponente und einer Vielzahl von Kanälen, die auf dem zweiten Bild basierende Chrominanz-Komponenten enthalten.

12. Verfahren nach Anspruch 10 oder 11, wobei
die Monochromkamera und die Farbkamera synchronisiert sind, um das erste Bild und das zweite Bild im Wesentlichen zur gleichen Zeit zu erfassen, und
das Erfassen jedes des ersten Bildes und des zweiten Bildes zu einem Spitzenwert eines Beleuchtungszyklus erfolgt.

13. Verfahren nach Anspruch 12, wobei die Farbkamera und die Monochromkamera im Wesentlichen das gleiche Sichtfeld aufweisen.

14. Verfahren nach einem der Ansprüche 10 bis 13, wobei eine Differenz zwischen einem Zeitpunkt, zu dem die Farbkamera das zweite Bild erfasst, und einem Zeitpunkt, zu dem die Monochromkamera das erste Bild erfasst, geringer ist als eine Integrationszeit der Monochromkamera.

15. Nichtflüchtiges computerlesbares Medium, das Anweisungen speichert, die, wenn sie von einem oder mehreren Prozessoren eines Kamerasystems ausgeführt werden, den einen oder die mehreren Prozessoren veranlassen, das Verfahren nach einem der Ansprüche 10 bis 14 durchzuführen.

## Revendications

1. Système de caméra, comprenant :
une caméra monochrome (182), présentant un obturateur global, configurée pour capturer une première image (3100) d'une scène ;
une caméra couleur (184), disposée séparément de la caméra monochrome et présentant un obturateur global, configurée pour capturer une deuxième image (3200) de la scène ; et un ou plusieurs processeurs (110) configurés pour:
aligner la deuxième image sur la première image, et
fournir des informations de couleur de la deuxième image à la première image pour obtenir une troisième image (3300) représentant la scène, **caractérisé en ce que** :
les un ou plusieurs processeurs sont configurés pour fournir les informations de couleur de la deuxième image à la première image en transférant (4100) les informations de couleur de parties de la deuxième image à des parties correspondantes de la première image pour ces parties de la deuxième image qui sont alignées sur des parties correspondantes de la première image, et
les un ou plusieurs processeurs sont configurés pour identifier des parties non alignées de la première image, pour lesquelles les parties de la deuxième image ne sont pas alignées sur des parties correspondantes de la première image, et pour appliquer des informations de couleur synthétisées aux parties non alignées de la première image.

2. Système de caméra selon la revendication 1, dans lequel la caméra monochrome et la caméra couleur sont synchronisées pour capturer la première image et la deuxième image sensiblement au même moment.

3. Système de caméra selon la revendication 2, dans lequel chacune de la première image et de la deuxième image sont capturées lorsqu'une condition d'éclairage maximale se produit dans un environnement dans lequel la caméra monochrome et la caméra couleur sont disposées.

4. Système de caméra selon une quelconque revendication précédente, dans lequel la caméra monochrome et la caméra couleur sont disposées de manière à faire face dans une même direction et sont disposées à une distance inférieure d'une distance seuil l'une de l'autre, et éventuellement dans lequel la distance seuil est de dix centimètres ou moins.

5. Système de caméra selon une quelconque revendication précédente, dans lequel la caméra couleur est une caméra rouge-vert-bleu (RVB).

6. Système de caméra selon une quelconque revendication précédente, dans lequel la caméra couleur présente une résolution inférieure à celle de la caméra monochrome.

7. Système de caméra selon une quelconque revendication précédente, dans lequel la caméra monochrome présente une taille supérieure à celle de la caméra couleur.

8. Système de caméra selon une quelconque revendication précédente, dans lequel
la première image comporte une composante de luminance, et
la troisième image comporte la composante de luminance de la première image et une composante de chrominance sur la base de la deuxième image.

9. Système de caméra selon une quelconque revendication précédente, comprenant également :
une première ressource d'apprentissage automatique pour aligner la deuxième image sur la première image, et une seconde ressource d'apprentissage automatique pour synthétiser des informations de couleur pour des parties non alignées de la première image pour lesquelles des parties de la deuxième image ne sont pas alignées sur des parties correspondantes de la première image, et pour appliquer les informations de couleur synthétisées aux parties non alignées de la première image.

10. Procédé mis en œuvre par ordinateur, comprenant les étapes :
de capture (5100), par une caméra monochrome (182) présentant un obturateur global, d'une première image (3100) d'une scène ;
de capture (5200), par une caméra couleur (184) disposée séparément de la caméra monochrome et
présentant un obturateur global, d'une deuxième image (3200) de la scène ; d'alignement (5300) de la deuxième image sur la première image ;
d'obtention (5400) d'une troisième image (3300) représentant la scène en fournissant des informations de couleur de la deuxième image à la première image, **caractérisé en ce que**
la fourniture des informations de couleur de la deuxième image à la première image comprend le transfert (4100) d'informations de couleur de parties de la deuxième image à des parties correspondantes de la première image pour ces parties de la deuxième image qui sont alignées sur des parties correspondantes de la première image ;
et le procédé comprend également :
l'identification de parties non alignées de la première image pour lesquelles des parties de la deuxième image ne sont pas alignées sur des parties correspondantes de la première image ;
la synthèse, par une ressource d'apprentissage automatique, d'informations de couleur pour les parties non alignées de la première image ; et
l'application des informations de couleur synthétiséesaux parties non alignées de la première image.

11. Procédé selon la revendication 10, dans lequel
la première image comporte un canal unique présentant une composante de luminance, et
la troisième image comporte au moins trois canaux comportant un premier canal présentant la composante de luminance et une pluralité de canaux comportant des composantes de chrominance sur la base de la deuxième image.

12. Procédé selon la revendication 10 ou 11, dans lequel
la caméra monochrome et la caméra couleur sont synchronisées pour capturer la première image et la deuxième image sensiblement au même moment, et
la capture de chacune des première et deuxième images se produit à un pic d'un cycle d'éclairage.

13. Procédé selon la revendication 12, dans lequel la caméra couleur et la caméra monochrome présentent un champ de vision sensiblement identique.

14. Procédé selon l'une quelconque des revendications 10 à 13, dans lequel une différence entre un moment auquel la caméra couleur capture la deuxième image et un moment auquel la caméra monochrome capture la première image est inférieure à un temps d'intégration de la caméra monochrome.

15. Support non transitoire lisible par ordinateur stockant des instructions qui, lorsqu'elles sont exécutées par un ou plusieurs processeurs d'un système de caméra, amènent les un ou plusieurs processeurs à réaliser le procédé selon l'une quelconque des revendications 10 à 14.
